# EUROPEAN PATENT APPLICATION

(11) **EP 1 349 343 A1**
(43) Date of publication of application: **01.10.2003**
(21) Application number: 03002013.5
(22) Date of filing: 28.01.2003
(51) Int. Cl.: H04L 29/06, H04L 9/08, H04L 12/28, H04L 12/40

(54) **Communication devices with limited copyright protection range**

(30) Priority: 28.01.2002 JP 2002019135
(71) Applicant: Kabushiki Kaisha Toshiba, Tokyo (JP)
(72) Inventor: Saito, Takeshi, Minato-ku, Tokyo (JP); Nakakita, Hideaki, Minato-ku, Tokyo (JP); Tsunoda, Keiji, Minato-ku, Tokyo (JP)
(74) Representative: HOFFMANN - EITLE

(57) **Abstract**

In a communication device having a function for encrypting and transferring, or receiving and decrypting contents data to be protected by copyright, an authentication and key exchange procedure with another communication device is carried out by exchanging data for the authentication and key exchange procedure directly on frames of a specific physical network or frames of a specific datalink layer network, so as to enable the encryption as the copyright protection and the decryption at the communication device and the another communication device.

## Description

### BACKGROUND OF THE INVENTION

### FIELD OF THE INVENTION

The present invention relates to a communication device and a communication control method for exchanging AV data by using a copyright protection function.

### DESCRIPTION OF THE RELATED ART

Products called digital information home electronics are increasing. These are a group of products that are expected to be widespread in conjunction with the start of the digital broadcasting, and include a wide variety of products for handling digital data and digital contents such as a digital broadcasting compatible TV, a set-top box, a digital VTR, a DVD player, a hard disk recorder, etc.

In these products, a copyright protection must be taken into consideration. Digital data has the often emphasized advantage that there is no quality degradation associated with the copying, but it also has a disadvantage that an illegal copying is easy.

For this reason, the IEEE 1394 which is a digital network for connecting digital AV devices is equipped with an authentication and key exchange mechanism and a data encryption function.

Here, the case of transferring the copyright protected AV data (which is assumed to be encrypted) from one transmission device to a reception device will be considered. It is preferable to limit a range for exchanging this AV data (which is assumed to be a range in which the reception device can decrypt) to be within a certain range (within a range in which the legitimate right to use that AV data is valid (within a range of the private use according to the Japanese copyright law article 30, for example) or within a range narrower than that, for example), such that the exchange of the AV data beyond such a range is not allowed (as long as it is assumed that no measure such as that for requiring the payment of a viewing fee, a copyright fee, etc., is taken).

A typical example of the exchange of the AV data within a certain range is communications closed within a home network such as the IEEE 1394, the radio network, etc.

A typical example of the change of the AV data beyond a certain range is exchanges through a "public network (the Internet or the telephone network, for example)".

In near future, the digital networks are expected to be diversified into various types such as radio, PC network, etc., but currently many of them do not account for the copyright protection.

Also, the networks are in a variety of forms ranging from a local one to a global one, and it is preferable to distinguish them clearly from a viewpoint of the copyright protection.

### BRIEF SUMMARY OF THE INVENTION

It is therefore an object of the present invention to provide a communication device and a communication control method capable of limiting a range in which the copyright protected contents data can be utilized by encrypting it, transferring it and decrypting it, to be within a certain range.

According to one aspect of the present invention there is provided a communication device having a function for encrypting and transferring, or receiving and decrypting contents data to be protected by copyright, comprising: an encryption processing unit configured to apply an encryption as a copyright protection to the contents data to be transferred, or apply a decryption to received contents data; a transfer processing unit configured to carry out a transfer of the contents data to which the encryption is applied as the copyright protection, on a prescribed network layer protocol; a physical network interface unit configured to function as an interface with respect to a specific physical network or a specific datalink layer network; and an authentication and key exchange processing unit configured to carry out an authentication and key exchange procedure with another communication device, by exchanging data for the authentication and key exchange procedure directly on frames of the specific physical network or frames of the specific datalink layer network, so as to enable the encryption as the copyright protection and the decryption at the communication device and the another communication device.

According to another aspect of the present invention there is provided a communication device having a function for encrypting and transferring, or receiving and decrypting contents data to be protected by copyright which contains no copyright protection control data, comprising: an encryption processing unit configured to apply an encryption as a copyright protection to the contents data to be transferred, or apply a decryption to received contents data; a transfer processing unit configured to carry out a transfer of the contents data to which the encryption is applied as the copyright protection, on a prescribed network layer protocol; and an authentication and key exchange processing unit configured to carry out an authentication and key exchange procedure with another communication device, including a procedure for exchanging a part or a whole of copyright protection control data for the contents data that is a target of the authentication and key exchange procedure, so as to enable the encryption as the copyright protection and the decryption at the communication device and the another communication device.

According to another aspect of the present invention there is provided a communication control method at a communication device having a function for encrypting and transferring, or receiving and decrypting contents data to be protected by copyright, comprising: transmitting or receiving a request for an authentication and key exchange procedure that is directly mounted on a frame of a specific physical network or a specific datalink layer network, for enabling an encryption as a copyright protection and a decryption at the communication device and another communication device; and carrying out the authentication and key exchange procedure with the another communication device, by exchanging data for the authentication and key exchange procedure directly on frames of the specific physical network or frames of the specific datalink layer network.

According to another aspect of the present invention there is provided a communication control method at a communication device having a function for encrypting and transferring, or receiving and decrypting contents data to be protected by copyright which contains no copyright protection control data, comprising: transmitting or receiving a request for an authentication and key exchange procedure for enabling an encryption as a copyright protection and a decryption at the communication device and another communication device; and carrying out the authentication and key exchange procedure with the another communication device, including a procedure for exchanging a part or a whole of copyright protection control data for the contents data that is a target of the authentication and key exchange procedure.

According to another aspect of the present invention there is provided a computer program product for causing a computer to function as a communication device having a function for encrypting and transferring, or receiving and decrypting contents data to be protected by copyright, the computer program product comprising: a first computer program code for causing the computer to apply an encryption as a copyright protection to the contents data to be transferred, or apply a decryption to received contents data; a second computer program code for causing the computer to carry out a transfer of the contents data to which the encryption is applied as the copyright protection, on a prescribed network layer protocol; a third computer program code for causing the computer to function as an interface with respect to a specific physical network or a specific datalink layer network; and a fourth computer program code for causing the computer to carry out an authentication and key exchange procedure with another communication device, by exchanging data for the authentication and key exchange procedure directly on frames of the specific physical network or frames of the specific datalink layer network, so as to enable the encryption as the copyright protection and the decryption at the communication device and the another communication device.

According to another aspect of the present invention there is provided a computer program product for causing a computer to function as a communication device having a function for encrypting and transferring, or receiving and decrypting contents data to be protected by copyright which contains no copyright protection control data, the computer program product comprising: a first computer program code for causing the computer to apply an encryption as a copyright protection to the contents data to be transferred, or apply a decryption to received contents data; a second computer program code for causing the computer to carry out a transfer of the contents data to which the encryption is applied as the copyright protection, on a prescribed network layer protocol; and a third computer program code for causing the computer to carry out an authentication and key exchange procedure with another communication device, including a procedure for exchanging a part or a whole of copyright protection control data for the contents data that is a target of the authentication and key exchange procedure, so as to enable the encryption as the copyright protection and the decryption at the communication device and the another communication device.

Other features and advantages of the present invention will become apparent from the following description taken in conjunction with the accompanying drawings.

### BRIEF DESCRIPTION OF THE DRAWINGS

Fig. 1 is a diagram showing an exemplary configuration of a network system according to one embodiment of the present invention.
Fig. 2 is is block diagram showing an exemplary configuration of a radio AV transmission device in the network system of Fig. 1.
Fig. 3 is is block diagram showing an exemplary configuration of a radio AV reception device in the network system of Fig. 1.
Fig. 4 is is block diagram showing an exemplary configuration of a wired AV reception device in the network system of Fig. 1.
Fig. 5 is a diagram showing an exemplary format of a radio layer frame that can be used in the network system of Fig. 1.
Fig. 6 is a sequence chart showing one exemplary overall operation sequence for the network system of Fig. 1.
Fig. 7 is a flow chart showing an exemplary procedure for the authentication and key exchange by a radio AV transmission device in the network system of Fig. 1.
Fig. 8 is a flow chart showing an exemplary procedure for the authentication and key exchange by a radio AV reception device or a wired AV reception device in the network system of Fig. 1.
Fig. 9 is a diagram showing one exemplary AV data transfer format using an IP packet that can be used in the network system of Fig. 1.
Fig. 10 is a diagram showing one exemplary data format for transferring the authentication and key exchange data that can be used in the network system of Fig. 1.
Fig. 11 is a diagram showing another exemplary data format for transferring the authentication and key exchange data that can be used in the network system of Fig. 1.
Fig. 12 is a sequence chart showing another exemplary overall operation sequence for the network system of Fig. 1.
Fig. 13 is a sequence chart showing another exemplary overall operation sequence for the network system of Fig. 1.
Fig. 14 is a sequence chart showing another exemplary overall operation sequence for the network system of Fig. 1.
Fig. 15 is a diagram showing another exemplary AV data transfer format using an IP packet that can be used in the network system of Fig. 1.
Fig. 16 is a sequence chart showing another exemplary overall operation sequence for the network system of Fig. 1.

### DETAILED DESCRIPTION OF THE INVENTION

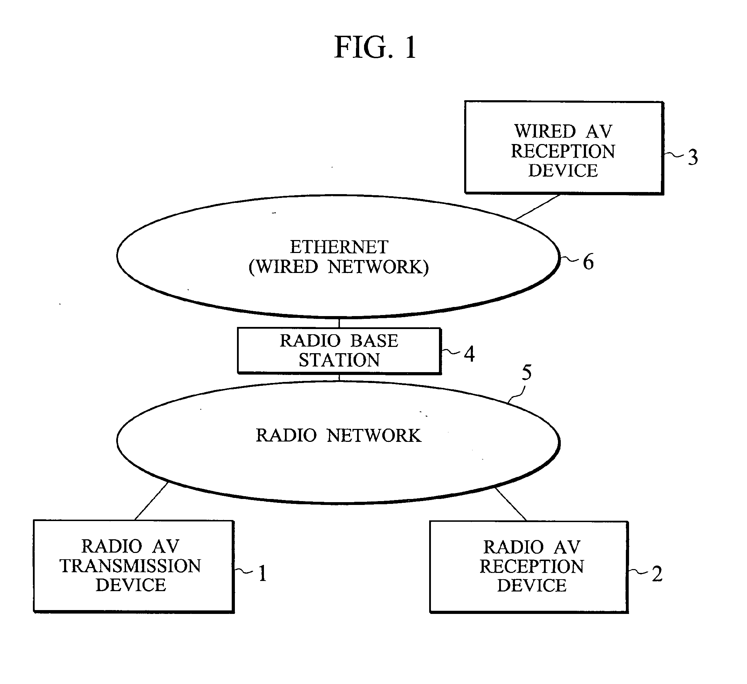

Referring now to Fig. 1 to Fig. 16, one embodiment of a communication device and a communication control method according to the present invention will be described in detail.

Fig. 1 shows an exemplary configuration of a network system according to this embodiment.

Fig. 1 is showing home networks of one home, and network devices connected to them. Besides these network devices shown in Fig. 1, other network devices or other devices may also exist.

As shown in Fig. 1, in this home, an Ethernet (wired network) 6 and a radio network 5 are existing as the home networks, and they are interconnected at a radio base station (radio access point) 4. This radio base station 4 plays a role of a bridge (Ethernet bridge). It is assumed that the packets are transferred in a form of Ethernet frame (or a form based on it) even on the radio network 5 (although the present invention is not limited to this case). For example, the radio LAN such as the IEEE 802.11a or the IEEE 802.11b can be used. In addition, a radio AV transmission device 1 and a radio AV reception device 2 are connected to the radio network 5, while a wired AV reception device 3 is connected to the Ethernet 6.

The AV data exchanges are carried out between the radio AV transmission device 1 and the radio AV reception device 2, as well as between the radio AV transmission device 1 and the wired AV reception device 3. The radio AV transmission device 1 is a device that can be a source device of the AV data such as a set-top box, a DVD player, etc., whereas each of the radio AV reception device 2 and the wired AV reception device 3 is a device that can be a sink device of the AV data such as a TV, a display, a speaker, a video and audio recording device, etc.

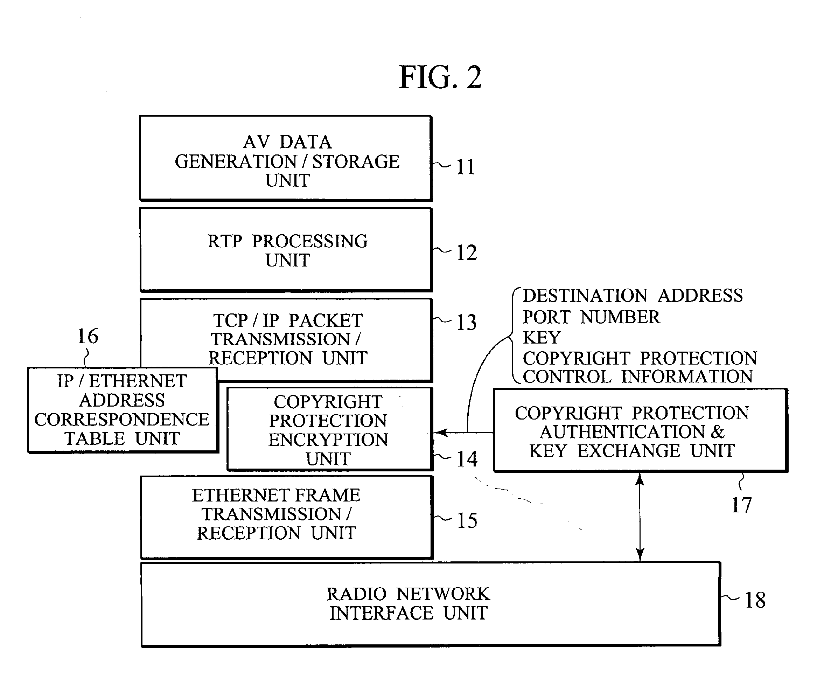

Fig. 2 shows an exemplary internal configuration of the radio AV transmission device 1.

As shown in Fig. 2, the radio AV transmission device 1 has: an AV data generation/storage unit 11 for generating and storing the AV data and becoming a source of the AV data to be transmitted to the network; an RTP processing unit 12 for carrying out the transport layer processing of the AV data such as a timestamp processing, a sequence number processing, etc.; a TCP/IP packet transmission/reception unit 13 for transmitting/receiving these AV data in forms of TCP/IP packets; a copyright protection encryption unit 14 for carrying out the encryption processing of the AV data, for those data which require the copyright protection processing such as the encryption; an Ethernet frame transmission/reception unit 15 for transmitting/receiving Ethernet frames; an IP/Ethernet address correspondence table unit 16 for setting an IP address and an Ethernet address in correspondence; a copyright protection authentication and key exchange unit 17 for carrying out an authentication, a key exchange, etc., with the AV reception device for the purpose of the copyright protection; and a radio network interface unit 18 functioning as an interface to the radio network 5.

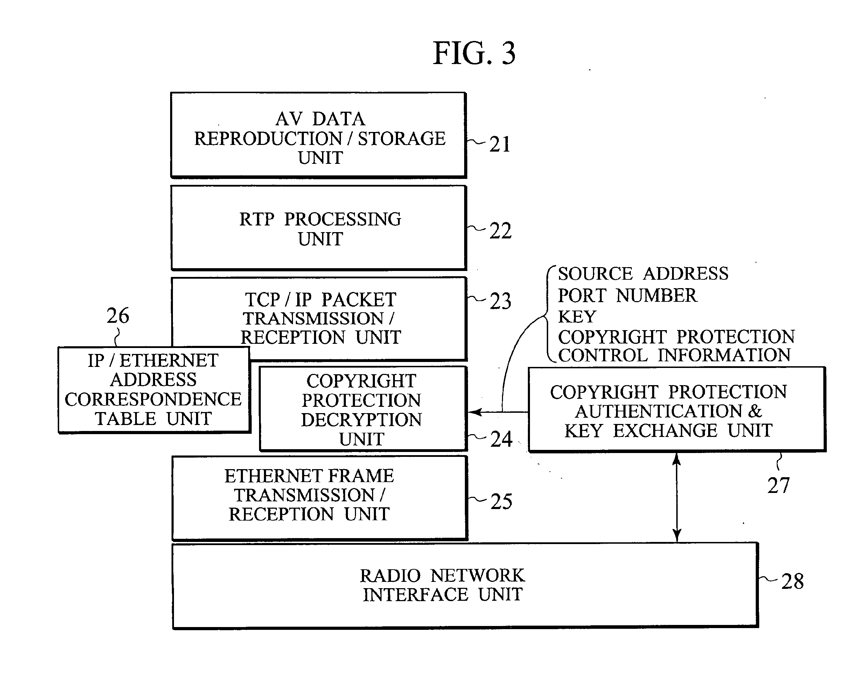

Fig. 3 shows an exemplary internal configuration of the radio AV reception device 2.

As shown in Fig. 3, the radio AV reception device 2 has: a radio network interface unit 28 functioning as an interface to the radio network 5; an Ethernet frame transmission/reception unit 25 for transmitting/receiving Ethernet frames; a copyright protection decryption unit 24 for decrypting the transferred AV data that are encrypted for the purpose of the copyright protection; a TCP/IP packet transmission/reception unit 23 for transmitting/receiving these AV data in forms of TCP/IP packets; an RTP processing unit 22 for carrying out the transport layer processing of the AV data such as a timestamp processing, a sequence number processing, etc.; an AV data reproduction/storage unit 21 for reproducing and storing (video and audio recording) the received AV data and becoming a sink of the AV data; an IP/Ethernet address correspondence table unit 26 for setting an IP address and an Ethernet address in correspondence; and a copyright protection authentication and key exchange unit 27 for carrying out an authentication, a key exchange, etc., with the AV transmission device for the purpose of the copyright protection.

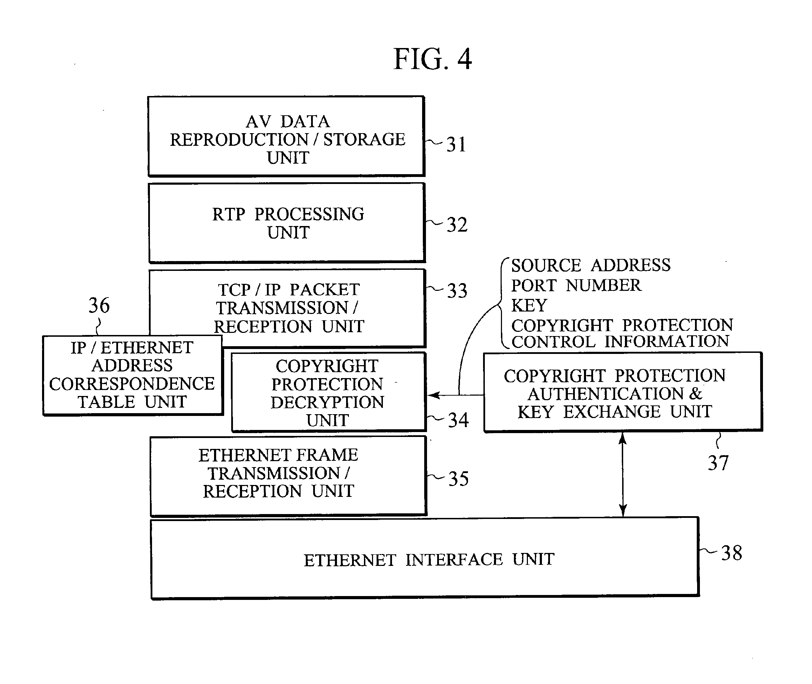

Fig. 4 shows an exemplary internal configuration of the wired AV reception device 3.

As shown in Fig. 4, the wired AV reception device 3 connected to the Ethernet has basically the similar configuration as the radio AV reception device 2 of Fig. 3 (except that it has the Ethernet interface unit 38 instead of the radio network interface unit 18 of Fig. 3, as it is to be connected to the Ethernet). Note that, as will be described below, at least a part of the authentication and the key exchange to be carried out between the radio AV reception device 2 and the radio AV transmission device 1 for the purpose of the copyright protection uses exchanges on radio control frames (e.g. 802.11 frame in the case of 802.11 wireless LAN). But the wired AV reception device 3 has no function for exchanging the radio control frames, so that there is also a difference from the radio AV reception device 2 in that the copyright protection control data to be exchanged by the copyright protection authentication and key exchange unit 37 are transferred in forms of Ethernet frames or IP packets, unlike the radio AV reception device 2.

Next, a format of packets to be exchanged in the home network system of this embodiment will be described.

The TCP/IP packet is transferred by being encapsulated in an Ethernet frame, both on the radio network 5 and the Ethernet 6. In the case where the network is the Ethernet, the packet is transferred in a form of this Ethernet frame (Ethernet header + TCP/IP packet). On the other hand, in the case where the network is the radio network, it is transferred in a form in which a radio layer header is attached to the above described Ethernet frame (radio layer header + Ethernet header + TCP/IP packet). Note that the trailers may be used according to the protocol (which can be a protocol that uses trailers or a protocol that does not use trailers).

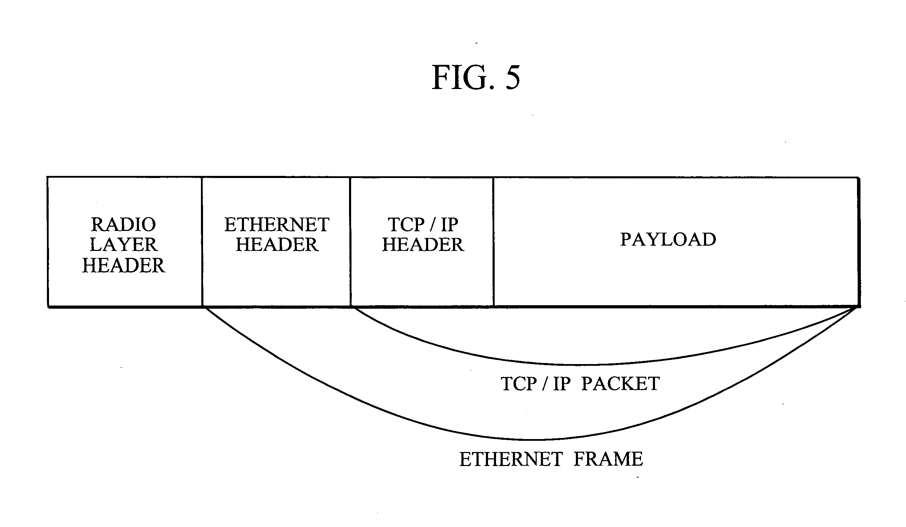

Fig. 5 shows an exemplary format of the radio layer frame.

The radio layer header contains control data to be used only on the radio network 5 (FC field and Dur/ID field in the 802.11 radio LAN, for example). This FC field contains two bits Type field, which indicates a type of the radio layer frame. The Type field has a value "0" for the management, "1" for the control, and "2" for the ordinary data. The representative of the management radio layer frame is a beacon, which is periodically transmitted to the network and mainly used for adjusting a clock on the radio layer of each radio AV device. Besides that, the management radio layer frames include those for the probe request and response, the authentication relationship setup and release, the network joining request and response, etc. On the other hand, the control radio layer frames include that for a transmission period setting, that for an acknowledgement, etc.

The above described copyright protection control data can be handled by any of the management radio layer frame, the control radio layer frame, and a new type of radio layer frame with the Type field value of "3", and can be utilized in the copyright protection sequence to be described below.

In any type of the frame, the FC field also contains four bits SubType field, and by setting the currently reserved SubType as that for the copyright protection, it becomes possible to identify the copyright protection control data at each device. It can be utilized in the authentication and key exchange request and the authentication and key exchange procedure to be described below.

In the following, the operation in this embodiment will be described. Note that the following description is directed to the case of using a mechanism of DTCP (Digital Transmission Content Protection) as the copyright protection mechanism (although it is also possible to use the other copyright protection mechanism). Details of DTCP can be found at "http://www.dtcp.com".

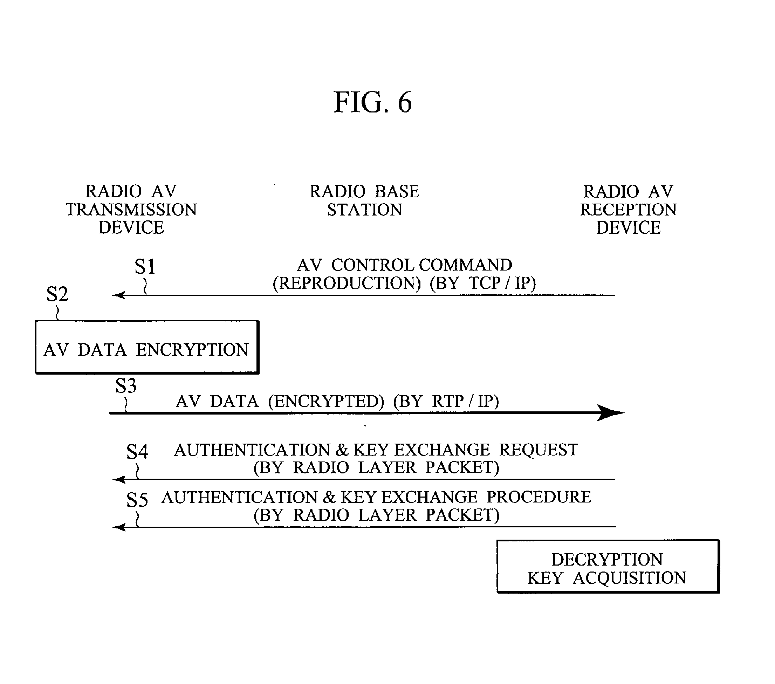

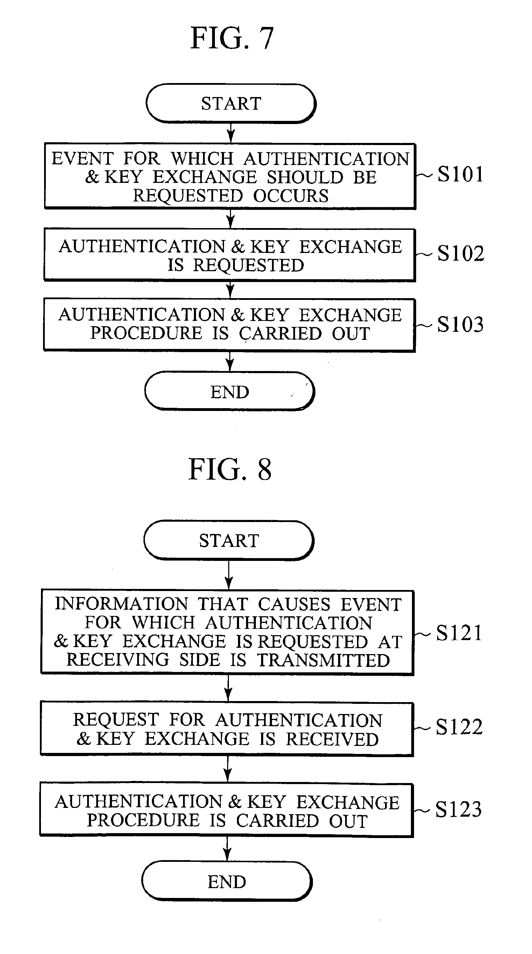

Fig. 6 shows an exemplary sequence in the home network of this embodiment. Also, Fig. 7 shows an exemplary procedure for the authentication and key exchange of the radio AV transmission device 1, and Fig. 8 shows an exemplary procedure for the authentication and key exchange of the radio AV reception device 2. Note that the exemplary authentication and key exchange procedures of the radio AV transmission device 1 and the wired AV reception device 3 are similar to those shown in Fig. 7 and Fig. 8, in each exemplary sequence described below.

Here, the exemplary case where the radio AV reception device 2 requests the transmission of the AV data to the radio AV transmission device 1 will be described. In this case, the exchange of command (protocol) is carried out on the TCP/IP, by using AV/C protocol (command and its protocol for controlling AV devices as defined by the 1394 trade association) and the RTSP (protocol for remote controlling the AV streaming function of the Web server as defined by the IETF), for example (S1).

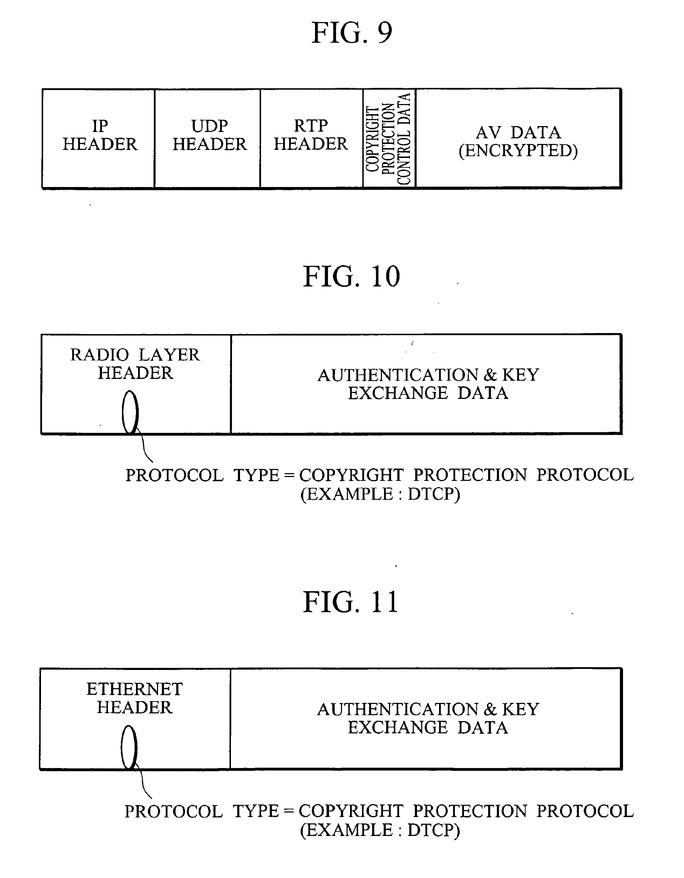

Then, the radio AV transmission device 1 receives the above described command, and starts the AV data transmission with respect to the radio AV reception device (S2, S3, S121). This AV data transmission is carried out by the TCP/IP packets (or by the UDP/IP packets). In practice, as shown in Fig. 9, the AV data to be transferred may be transferred by the RTP (Realtime Transport Protocol: a transfer protocol for the AV data transfer standardized by the IETF). Here, the data to be transmitted are assumed to be the AV data that should be protected by the copyright protection. In this case, the AV data to be transferred by the RTP are encrypted before they are transferred (S2). Also, the (encrypted) AV data is transferred in a form in which the copyright protection control data such as a CCI (Copy Control Information), an encryption management information, an encryption re-calculation timing, etc., are attached to the RTP packet.

Upon receiving this, the radio AV reception device 2 discovers that the received AV data is encrypted or has learned in advance that the encrypted AV data will be transferred (S101), and requests the authentication and key exchange procedure in an attempt to obtain an encryption key (here it is assumed that encryption key = decryption key) to the radio AV transmission device 1 (S4, S102, S122). With this request as a trigger, the authentication and key exchange procedure is carried out between the radio AV transmission device 1 and the radio AV reception device 2 (S5, S103, S123).

The authentication and key exchange request (S4) and the actual authentication and key exchange procedure (S5) at this point are carried out in a form in which the data for AKE (Authentication and Key Exchange) are directly mounted on the radio layer frame as shown in Fig. 10, rather than on the TCP/IP packet as shown in Fig. 5. In the radio layer header, it is also possible to enter a numerical value indicating that it is the copyright protection protocol (it is the DTCP, for example) into a field for indicating "which protocol's frame this radio layer frame is". By doing so, it becomes possible for the receiving side node to recognize that the frame for the copyright protection (AKE) is being transferred.

Also, this AKE procedure is carried out by using the radio layer frames so that it is surely guaranteed that this AKE procedure will be processed entirely within the radio network 5.

In other words, if the case of carrying out the AKE procedure by using the TCP/IP packets is considered, it would become possible to exchange the AKE packets, between neighboring homes, over a long distance, or across the national border (because the TCP/IP packets can be exchanged in such a manner), and there can be cases where the transfer (including copy) of the AV data becomes possible over a range that exceeds a range of the private use according to the Japanese copyright law article 30, for example.

In contrast, by carrying out the AKE procedure by using the radio layer frames as in this embodiment, the maximum range over which the AKE procedure can be carried out is guaranteed to be confined within the same radio network. This is because the radio layer frames cannot possibly be transferred beyond the radio network.

Of course, in order to reinforce this mechanism, it is possible to provide a radio base station or a bridge device with a property that "the bridge connection to an opposing side network will never be made for the radio layer frames used for the transfer related to the AKE procedure", such that it becomes possible to make the above described guarantee more complete.

Now, when the above described authentication and key exchange procedure is finished, it implies that the state in which the encryption key value can be shared is established between the radio AV transmission device 1 and the radio AV reception device 2. As already explained, this state (a state in which the encryption key value can be shared between two nodes) is limited only between nodes that are connected to the same radio network 5.

In other words, the transfer of the radio layer control packets is possible between the radio AV transmission device 1 and the radio AV reception device 2 so that the above described AKE procedure can be successful. On the other hand, between the radio AV transmission device 1 and the wired AV reception device 3, the exchange of packets (frames) for the AKE is impossible at a side beyond the radio base station 4 as seen from the radio AV transmission device 1 (i.e., between the radio base station 4 and the wired AV reception device 3), so that the AKE procedure will never be successful. For this reason, a section in which the copyright protection is valid can be limited to be "within the radio network (or even within one IP subnet)".

In this way, it becomes possible to prevent "the AKE beyond the radio network as well as the subsequent illegal AV data transfer".

Now, in the above, a range in which the copyright protection mechanism (a mechanism by which a legitimate AV data reception device can decrypt the received encrypted AV data) is valid can be limited within the radio network, by carrying out the exchange of the AKE data directly on the radio layer frames.

Instead of that, a range in which the copyright protection mechanism is valid can be limited to be a "range over which the Ethernet frames can reach".

This can be realized by carrying out the transfer of the AKE control data directly on the Ethernet frames as shown in Fig. 11. In other words, the Ethernet frames can be confined within the IP subnet in a range over which the Ethernet packets can reach, so that by carrying out the AKE procedure by using the Ethernet frames (instead of using the TCP/IP packets), a range in which the AKE can be successful can be limited to be a range over which the Ethernet frames can reach (which is usually within one IP subnet in which the bridge connection is permitted).

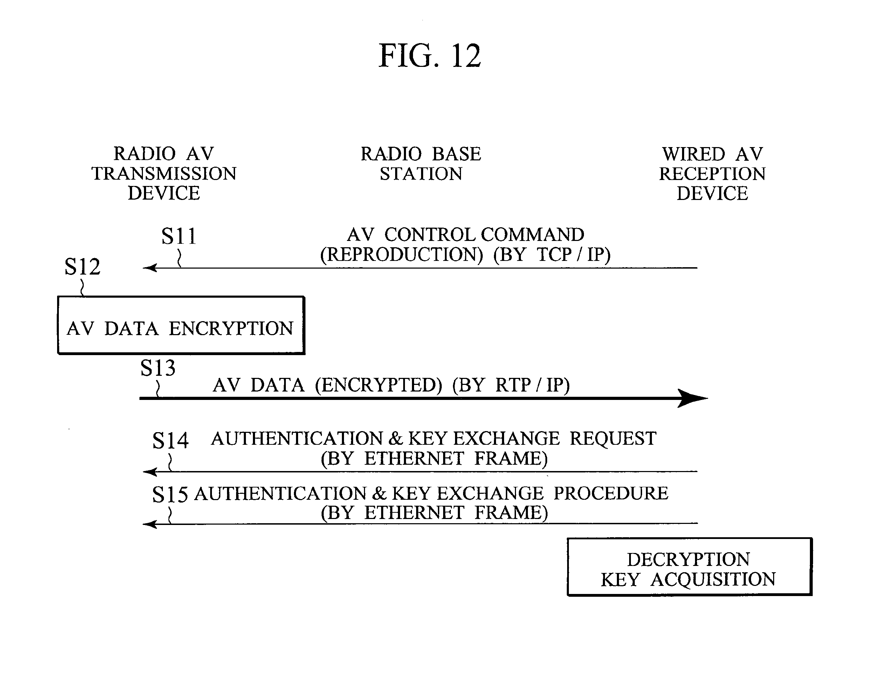

Fig. 12 shows an exemplary sequence in such a case. Note that, as already mentioned above, the exemplary authentication and key exchange procedures of the radio AV transmission device 1 and the wired AV reception device 3 are similar to those shown in Fig. 7 and Fig. 8 in this case.

As shown in Fig. 12, the exchange for the AKE between the radio AV transmission device 1 on the radio network 5 and the wired AV reception device 3 connected to the Ethernet 6 also becomes possible. In this case, it is possible to prevent the exchange for the AKE beyond an IP router, so that a range over which the copyright protected AV data can reach (a range in which the encrypted data can be decrypted) can be limited to be within the same subnet over which the Ethernet frames can be transferred.

Of course, in order to reinforce this mechanism, it is possible to provide a router device with a property that "the radio layer frames or the Ethernet frames used for the transfer related to the AKE procedure will never be routed to a different subnet", such that it becomes possible to make the above described guarantee more complete.

Note that, in the example of Fig. 1, for example, the radio AV transmission device 1 can adopt a configuration that uses only the radio layer frames for the authentication and key exchange procedure, a configuration that uses only the Ethernet frames for the authentication and key exchange procedure, or a configuration that selectively uses the radio layer frames and the Ethernet frames appropriately for the authentication and key exchange procedure.

Also, in the procedures of Fig. 6 and Fig. 12, the authentication and key exchange request and the authentication and key exchange procedure are carried out after the AV data transfer is started, but it is also possible to use a configuration in which the authentication and key exchange request and the authentication and key exchange procedure are carried out before the AV data transfer is started. Also, in the procedures of Fig. 6 and Fig. 12, it is possible to carry out the authentication and key exchange request and the authentication and key exchange procedure after the AV data transfer is completed, and it is also possible to carry out the authentication and key exchange request and the authentication and key exchange procedure in a middle of the AV data transfer.

Also, in the procedures of Fig. 6 and Fig. 12, it is possible to use a configuration in which the encrypted AV data are transferred from the beginning after the authentication and key exchange request and the authentication and key exchange procedure are successfully completed.

Also, in the procedures of Fig. 6 and Fig. 12, at a time of issuing one message from one device to the other device and returning a response to that one message from the other device to the one device during the authentication and key exchange request or the authentication and key exchange procedure, the authentication and key exchange request or the authentication and key exchange procedure may be interrupted in the case where a time since issuing that one message from the one device until receiving the response to that one message exceeds a prescribed reference time.

These remarks equally apply to each exemplary sequence described below.

In the following, variations of the authentication and key exchange (AKE) procedure to be carried out between the transmission device and the reception device on the radio layer frames or the Ethernet frames will be described.

Note that, in the following, it is assumed that either the radio layer frames or the Ethernet frames are to be used. In the example of Fig. 1, either the radio layer frames or the Ethernet frames can be used with respect to the radio AV reception device 2, and the Ethernet frames can be used with respect to the wired AV reception device 3. Also, here, the radio AV reception device 2 and the wired AV reception device 3 will be collectively referred to as an AV reception device.

The AKE is to be carried out for the AV stream that is to be transferred by a specific RTP stream. For this reason, as a presumption for carrying out the AKE, there can be cases where it is necessary to carry out the negotiation regarding "which AV stream is this AKE related to" For example, there can be cases where the AV reception device recognizes that the received AV stream is encrypted and solicits like "I wish to carry out the AKE for this AV stream" to the radio AV transmission device. Also, there can be cases where the radio AV transmission device judges that "this AV stream is to be transmitted to the AV reception device in an encrypted form, and there is a need to notify this fact in advance or simultaneously as the AV stream transfer so as to let it trigger the AKE", and notifies that "this AV stream is transmitted in an encrypted form, so that the AKE procedure for this AV stream should be carried out with respect to this device (radio AV transmission device)", to the AV reception device.

It is also possible to carry out "the AKE for validating all the RTP streams to be exchanged between the radio AV transmission device and the AV reception device" at once such that thereafter the AV data encryption will be carried out according to conditions determined by this AKE procedure for all the RTP streams to be exchanged between the radio AV transmission device and the AV reception device, rather than carrying out the AKE for each AV stream separately.

In that case, it is possible to carry out the information exchange regarding what kind of the copyright protection control information (the encryption management information, the encryption re-calculation timing, etc.) is to be used, for the communication using which port number.

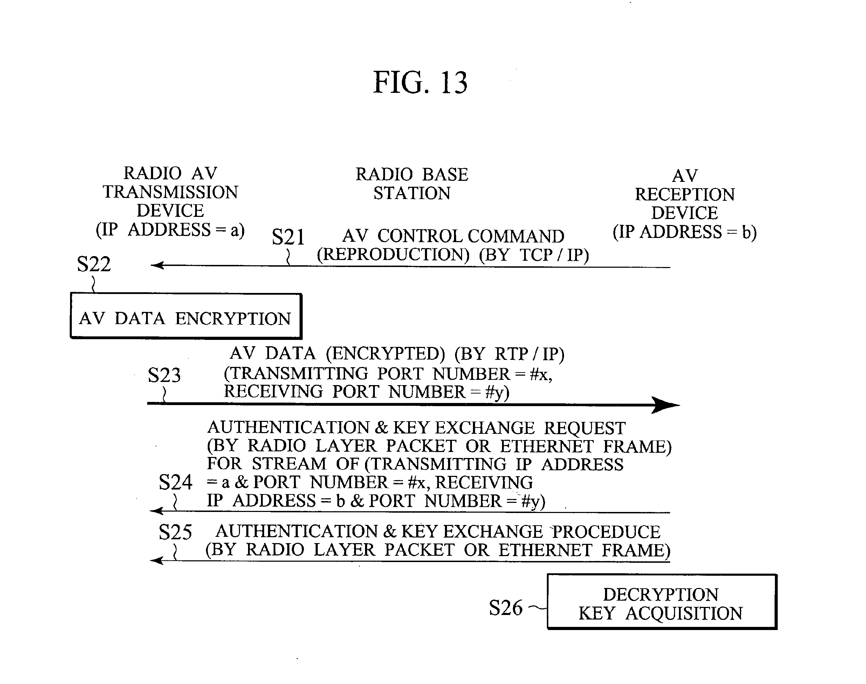

Fig. 13 shows an exemplary sequence in the case where the AV reception device (2 or 3) triggers the AKE first with respect to the radio AV transmission device 1.

Here, it is assumed that the radio AV transmission device has an IP address "a" and the transmitting port number "#x", and the AV reception device has an IP address "b" and the receiving port number "#y".

Similarly as in the procedures described above, the AV control command is issued from the AV reception device to the radio AV transmission device, and the radio AV transmission device encrypts the AV data and transfers it to the AV reception device (S21, S22, S23).

Here, the AV reception device recognizes that the received AV stream is encrypted by some method. For example, this can be recognized in "the case where the desired AV stream cannot be reproduced even when the received AV stream is decoded", or in "the case where the received AV stream is accompanied by the copyright protection control data as shown in Fig. 9, and the fact that this AV stream is encrypted can be recognized by detecting the copyright protection control data".

The AV reception device that recognized that the received AV stream is encrypted or potentially encrypted then transmits the authentication and key exchange request to the radio AV transmission device (S24). Note that, as described above, there can be cases where this is carried out by using the radio layer packet and cases where this is carried out by using the Ethernet frame. Also, as its protocol field value, it is possible to use a value indicating "DTCP", for example. Namely, it is possible to include this procedure as a part of the DTCP procedure.

At this point, the AV reception device explicitly indicates "which AV stream this AKE is related to" in that AKE request (or in the subsequent AKE procedure packet). For example, the IP address and the port number of the radio AV transmission device as well as the IP address and the port number of the AV reception device are explicitly described in that AKE request (see S24). Also, as another method for specifying the target AV stream, it is possible to explicitly describe a value of the SSRC field of the RTP (an identification number uniquely assigned to each AV stream: see the RTP specification RFC 1889 for details) in the AKE request. It is also possible to use a value of the "flow ID" contained in the IPv6 packet or the like. It is also possible to use the other methods.

This request may also contain information regarding the encryption management information, the encryption re-calculation timing, etc.

There can be cases where a plurality of AV streams (video and audio, for example) are exchanged simultaneously between the radio AV transmission device and the AV reception device, so that it is possible to make the information regarding "which AV stream is this AKE related to" (information on a set of the IP address and the port number of the transmission device and the reception device, a value of the SSRC or a value of the flow ID, or their combination, for example) to be capable of specifying a plurality of AV streams at once.

The radio AV transmission device that received such an AKE request recognizes the AV stream to which this AKE request (or the AKE procedure) is related, and continues the AKE procedure (S25).

Eventually, when the AKE procedure is finished, the AV reception device becomes capable of acquiring the decryption key of that encrypted AV stream (or acquiring an initial information for the calculation for the purpose of acquiring the decryption key) according to that AKE result (S26).

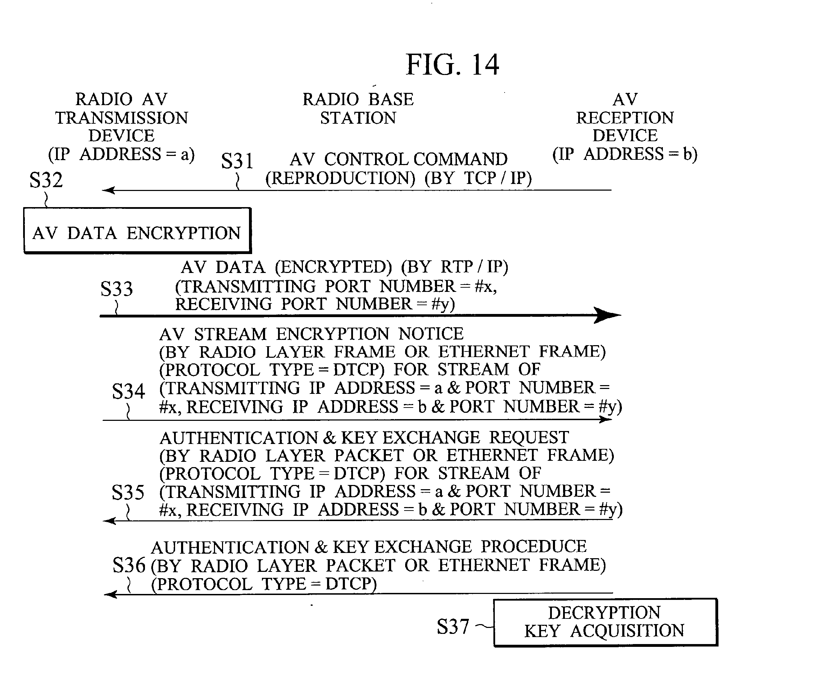

Next, Fig. 14 shows an exemplary sequence in the case where the radio AV transmission device 1 notifies that "this AV stream is transmitted in an encrypted form" for some AV stream with respect to the AV reception device (2 or 3), and the AV reception device makes the AKE request to the radio AV transmission device with this notification as a trigger.

The steps S31 to S33 are the same as the steps S21 to S23 in the exemplary sequence of Fig. 13.

In this exemplary sequence, the radio AV transmission device notifies to the AV reception device that the AV stream transmitted to the AV reception device is encrypted according to the protocol such as DTCP and there is a need to carry out the AKE with the radio AV transmission device in order for the AV reception device to decrypt this AV stream (S34). This notification can be carries out by using the IP packet, but here it is assumed that this notification is carried out by using the radio layer packet or the Ethernet frame in this exemplary sequence, similarly as in the AKE procedure to be carried out subsequently.

The steps S35 to S37 are the same as the steps S24 to S26 in the exemplary sequence of Fig. 13.

Namely, upon recognizing that the AV stream to be received or the received AV stream is encrypted, the AV reception device transmits the authentication and key exchange request to the transmission device (S35). The radio AV transmission device that received the AKE request recognizes the AV stream to which this AKE request (or the AKE procedure) is related, and continues the AKE procedure (S36). When the AKE procedure is finished, the AV reception device becomes capable of acquiring the decryption key of that encrypted AV stream (or acquiring an initial information for the calculation for the purpose of acquiring the decryption key) according to that AKE result (S37).

Now, in the description up to this point, it has been assumed that the copyright protection control data are attached to the AV stream to be transferred as in Fig. 9, similarly as the conventional DTCP. This copyright protection control data contains the encryption management information of that AV stream (information regarding whether this AV stream can be freely copied (copy free), can be copied only once (copy once), cannot be copied further (no more copy), or cannot be copied at all (never copy), for example), a flag for notifying the re-calculation timing of the encryption key (information regarding the RTP sequence number at which the use of the specific encryption key should start and the interval on the same sequence number at which the encryption key should be re-calculated subsequently, for example), etc.

However, there can be cases where the copyright protection control data cannot be attached to the AV stream to be transferred (i.e., the cases where there is a need to transfer the RTP packet as it is) depending on the circumstances.

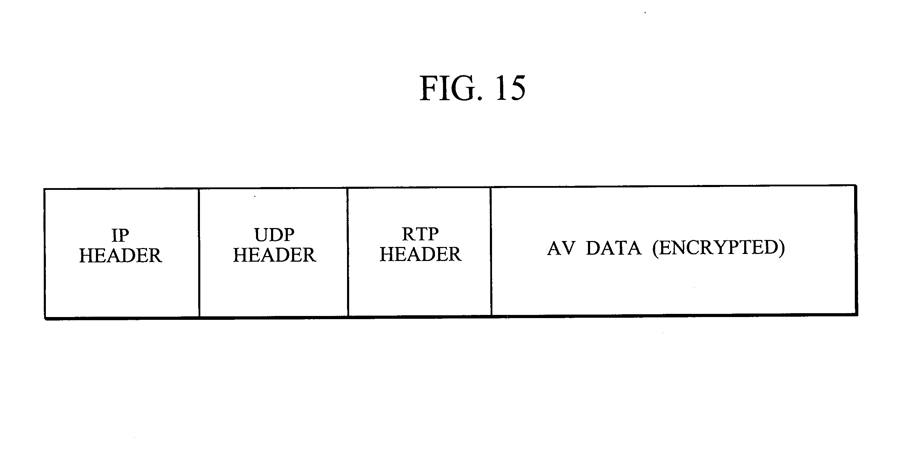

Fig. 15 shows an exemplary AV stream transfer format in such a case.

The example of Fig. 15 is basically a format in which the copyright protection control data is removed from a format of Fig. 9, that is the ordinary RTP packet format (but the AV stream in its payload is encrypted).

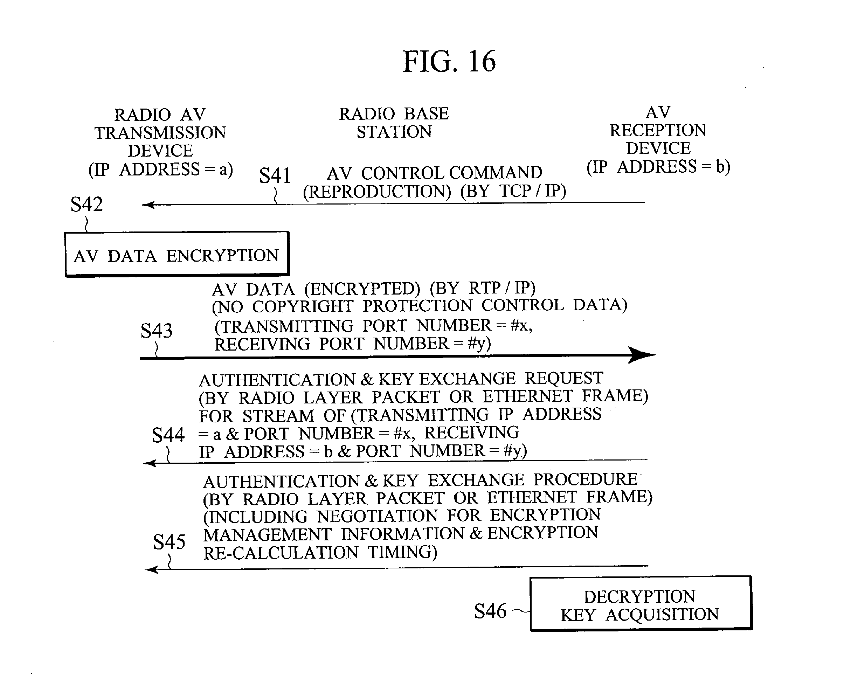

In such a case, the information regarding "the encryption management information of that AV stream" and "the number of packets after which the encryption key of the AV stream should be re-calculated" can be notified in advance (or during the transfer of that AV stream), in the above described AKE procedure. Fig. 16 shows an exemplary sequence in such a case.

For example, the radio AV transmission device notifies the encryption management information of the AV stream to be transferred and the re-calculation timing of the encryption key of the AV stream, to the AV reception device in the AKE procedure (see S43).

By doing so, it becomes possible to share the encryption management information and the encryption key re-calculation timing between the transmitting side and the receiving side in advance, without attaching the copyright protection control data to the AV stream to be transferred, and consequently it becomes possible to realize the secure AV stream transfer from the transmitting side to the receiving side.

Fig. 16 is directed to an exemplary case where the AV reception device triggers the AKE procedure, but the case of notifying from the radio AV transmission device to the AV reception device first can also be carried out similarly (it can be carried out at the step S36 in the exemplary sequence of Fig. 14, for example).

Note that Fig. 1 is directed to the case where the radio AV transmission device exists, but instead of that or in addition to that, the wired AV transmission device having the similar function may exist. The exemplary configuration of the wired AV transmission device can be that of Fig. 2 with a modification on the interface, where this modification is similar to the modification required in converting the radio AV reception device of Fig. 3 into the wired AV reception device of Fig. 4. Note however that the wired AV transmission device cannot use the radio layer frames, so that it should be provided with the function for carrying out the authentication and key exchange on the Ethernet frames. Consequently, in Fig. 1, the wired AV transmission device can carry out the authentication and key exchange with either one of the radio AV reception device and the wired AV reception device.

Note also that Fig. 1 is directed to the case where the Ethernet (wired network) and the radio network coexist, but it is also possible to have only the radio network existing. In this case, the authentication and key exchange can be carried out on the radio layer frames between the radio AV transmission device and the radio AV reception device (although it is also possible to carry out the authentication and key exchange on the Ethernet frames). Conversely, it is also possible to have only the Ethernet (wired network) existing. In this case, the authentication and key exchange can be carried out on the Ethernet frames between the wired AV transmission device and the wired AV reception device.

It is also possible to have one or a plurality of the other different radio base stations and radio networks connected to the Ethernet of Fig. 1, for example. Else, it is also possible to have one or a plurality of the other different Ethernets connected to the radio network of Fig. 1. Regardless of the configuration of the home network, the authentication and key exchange can be carried out only within a range in which the radio layer frames or the Ethernet frames can reach.

Note that the protocol used in the above description is only an example, and the present invention is equally applicable to the other protocol having the similar properties.

Also, the exemplary case of using the home network as a local area network has been described above, but the present invention is equally applicable to the other local area network such as an enterprise network.

Also, in the above description, it is assumed that encryption key = decryption key in the AV contents encryption processing, but the present invention is equally applicable to the case where encryption key ≠ decryption key.

As described, according to the present invention, it is possible to limit a range in which the copyright protected contents data can be utilized by encrypting it, transferring it and decrypting it, to be within a certain range (within one radio network in the same IP subnet or within the same IP subnet, for example).

It is to be noted that the above described embodiments according to the present invention may be conveniently implemented using a conventional general purpose digital computer programmed according to the teachings of the present specification, as will be apparent to those skilled in the computer art. Appropriate software coding can readily be prepared by skilled programmers based on the teachings of the present disclosure, as will be apparent to those skilled in the software art.

In particular, each one of the AV transmission device and the AV reception device of the above described embodiments can be conveniently implemented in a form of a software package.

Such a software package can be a computer program product which employs a storage medium including stored computer code which is used to program a computer to perform the disclosed function and process of the present invention. The storage medium may include, but is not limited to, any type of conventional floppy disks, optical disks, CD-ROMs, magneto-optical disks, ROMs, RAMs, EPROMs, EEPROMs, magnetic or optical cards, or any other suitable media for storing electronic instructions.

It is also to be noted that, besides those already mentioned above, many modifications and variations of the above embodiments may be made without departing from the novel and advantageous features of the present invention. Accordingly, all such modifications and variations are intended to be included within the scope of the appended claims.

## Claims

1. A communication device having a function for encrypting and transferring, or receiving and decrypting contents data to be protected by copyright, comprising:
an encryption processing unit configured to apply an encryption as a copyright protection to the contents data to be transferred, or apply a decryption to received contents data;
a transfer processing unit configured to carry out a transfer of the contents data to which the encryption is applied as the copyright protection, on a prescribed network layer protocol;
a physical network interface unit configured to function as an interface with respect to a specific physical network or a specific datalink layer network; and
an authentication and key exchange processing unit configured to carry out an authentication and key exchange procedure with another communication device, by exchanging data for the authentication and key exchange procedure directly on frames of the specific physical network or frames of the specific datalink layer network, so as to enable the encryption as the copyright protection and the decryption at the communication device and the another communication device.

2. The communication device of claim 1, wherein the authentication and key exchange processing unit exchanges data for the authentication and key exchange procedure directly on frames of the specific physical network which are radio layer frames.

3. The communication device of claim 1, wherein the authentication and key exchange processing unit exchanges data for the authentication and key exchange procedure directly on frames of the specific datalink layer network which are Ethernet frames.

4. The communication device of claim 1, wherein the authentication and key exchange processing unit exchanges data for the authentication and key exchange procedure which contains a prescribed information for identifying the contents data that is a target of the authentication and key exchange procedure by the authentication and key exchange processing unit.

5. The communication device of claim 4, wherein when the contents data is AV data and the prescribed network layer protocol is an Internet protocol, the prescribed information is given by using a part or all of an IP address and a port number of a transmitting side device of an AV stream and an IP address and a port number of a receiving side device of the AV stream.

6. The communication device of claim 4, wherein when the contents data is AV data and the prescribed network layer protocol is an Internet protocol, the prescribed information is given by using a value of SSRC contained in an RTP packet of an AV stream.

7. The communication device of claim 4, wherein when the contents data is AV data and the prescribed network layer protocol is an Internet protocol, the prescribed information is given by using a value of flow ID contained in an IP packet for transferring an AV stream.

8. The communication device of claim 1, wherein the authentication and key exchange processing unit carries out the authentication and key exchange procedure that includes a procedure for notifying that the contents data are transferred in an encrypted form obtained by the encryption as the copyright protection, from a transmitting side device to a receiving side device.

9. The communication device of claim 1, wherein the authentication and key exchange processing unit carries out the authentication and key exchange procedure that includes a procedure for exchanging a part or a whole of copyright protection control data for the contents data that is a target of the authentication and key exchange procedure, and
the transfer processing unit transfers the contents data without attaching the copyright protection control data.

10. The communication device of claim 1, further comprising a contents data processing unit configured to carry out a processing of the contents data.

11. The communication device of claim 1, wherein the transfer processing unit carries out the transfer of the contents data on the prescribed network layer protocol which is an Internet protocol.

12. The communication device of claim 1, wherein the transfer processing unit carries out the transfer of the contents data which is an AV data.

13. A communication device having a function for encrypting and transferring, or receiving and decrypting contents data to be protected by copyright which contains no copyright protection control data, comprising:
an encryption processing unit configured to apply an encryption as a copyright protection to the contents data to be transferred, or apply a decryption to received contents data;
a transfer processing unit configured to carry out a transfer of the contents data to which the encryption is applied as the copyright protection, on a prescribed network layer protocol; and
an authentication and key exchange processing unit configured to carry out an authentication and key exchange procedure with another communication device, including a procedure for exchanging a part or a whole of copyright protection control data for the contents data that is a target of the authentication and key exchange procedure, so as to enable the encryption as the copyright protection and the decryption at the communication device and the another communication device.

14. The communication device of claim 13, wherein the authentication and key exchange processing unit exchanges a part of a whole of the copyright protection control data that contains at least one of an encryption management information and an encryption re-calculation timing.

15. The communication device of claim 13, further comprising a contents data processing unit configured to carry out a processing of the contents data.

16. The communication device of claim 13, wherein the transfer processing unit carries out the transfer of the contents data on the prescribed network layer protocol which is an Internet protocol.

17. The communication device of claim 13, wherein the transfer processing unit carries out the transfer of the contents data which is an AV data.

18. A communication control method at a communication device having a function for encrypting and transferring, or receiving and decrypting contents data to be protected by copyright, comprising:
transmitting or receiving a request for an authentication and key exchange procedure that is directly mounted on a frame of a specific physical network or a specific datalink layer network, for enabling an encryption as a copyright protection and a decryption at the communication device and another communication device; and
carrying out the authentication and key exchange procedure with the another communication device, by exchanging data for the authentication and key exchange procedure directly on frames of the specific physical network or frames of the specific datalink layer network.

19. A communication control method at a communication device having a function for encrypting and transferring, or receiving and decrypting contents data to be protected by copyright which contains no copyright protection control data, comprising:
transmitting or receiving a request for an authentication and key exchange procedure for enabling an encryption as a copyright protection and a decryption at the communication device and another communication device; and
carrying out the authentication and key exchange procedure with the another communication device, including a procedure for exchanging a part or a whole of copyright protection control data for the contents data that is a target of the authentication and key exchange procedure.

20. A computer program product for causing a computer to function as a communication device having a function for encrypting and transferring, or receiving and decrypting contents data to be protected by copyright, the computer program product comprising:
a first computer program code for causing the computer to apply an encryption as a copyright protection to the contents data to be transferred, or apply a decryption to received contents data;
a second computer program code for causing the computer to carry out a transfer of the contents data to which the encryption is applied as the copyright protection, on a prescribed network layer protocol;
a third computer program code for causing the computer to function as an interface with respect to a specific physical network or a specific datalink layer network; and
a fourth computer program code for causing the computer to carry out an authentication and key exchange procedure with another communication device, by exchanging data for the authentication and key exchange procedure directly on frames of the specific physical network or frames of the specific datalink layer network, so as to enable the encryption as the copyright protection and the decryption at the communication device and the another communication device.

21. A computer program product for causing a computer to function as a communication device having a function for encrypting and transferring, or receiving and decrypting contents data to be protected by copyright which contains no copyright protection control data, the computer program product comprising:
a first computer program code for causing the computer to apply an encryption as a copyright protection to the contents data to be transferred, or apply a decryption to received contents data;
a second computer program code for causing the computer to carry out a transfer of the contents data to which the encryption is applied as the copyright protection, on a prescribed network layer protocol; and
a third computer program code for causing the computer to carry out an authentication and key exchange procedure with another communication device, including a procedure for exchanging a part or a whole of copyright protection control data for the contents data that is a target of the authentication and key exchange procedure, so as to enable the encryption as the copyright protection and the decryption at the communication device and the another communication device.
